# EUROPEAN PATENT SPECIFICATION

(11) **EP 3 842 727 B1**
(45) Date of publication and mention of the grant of the patent: **15.11.2023**
(21) Application number: 19461621.5
(22) Date of filing: 23.12.2019
(51) Int. Cl.: F28F 7/02, B22F 3/00, B33Y 80/00, F28D 7/00, F28D 7/04

(54) **ADDITIVELY MANUFACTURED SPIRAL DIAMOND HEAT EXCHANGER**
GENERATIV GEFERTIGTER SPIRALDIAMANTWÄRMETAUSCHER
ÉCHANGEUR DE CHALEUR EN DIAMANT À SPIRALES FABRIQUÉ ADDITIVEMENT

(43) Date of publication of application: 30.06.2021
(73) Proprietor: Hamilton Sundstrand Corporation, Charlotte, NC 28217 (US)
(72) Inventor: LEWANDOWSKI, Rafa, 58-130 Zarów (PL); HILGIER, Artur, 59-220 Legnica (PL)
(74) Representative: Dehns

(56) References cited:
- EP-A1- 2 365 270
- EP-A1- 3 124 906
- WO-A1-2017/214489
- WO-A1-2019/023703
- US-A- 4 479 533

## Description

### FIELD

The present invention described herein relates to a method for forming a heat exchanger with a spiral diamond core. A method corresponding to the preamble of claim 1 is disclosed in WO 2019/023703.

### BACKGROUND

Heat exchangers comprising a diamond channel core improve on conventional plate-fin heat exchangers due to the fact that all internal core faces are primary transfer surfaces. A diamond channel core is suitable for counter flow and parallel flow type heat exchangers. This core type is relatively simple to print by additive manufacturing (AM) techniques. However, it can be difficult to print the entire heat exchanger because the diamond channel core requires a complex manifold which is difficult to print. Printing issues arise because a design must meet face orientation restrictions specific to AM technology. When there are limitations to the printing of the heat exchanger, either complex distribution tanks or internal core turnround structures must be designed to compensate for this to allow for proper fluid distribution. It would therefore be useful to provide a diamond core that overcomes these problems by providing attachments to tanks and ports that are suitable for AM.

### SUMMARY

According to a first aspect there is a provided a method for forming a heat exchanger, as defined in claim 1. The method comprises forming a central channel and a core section. Forming the central channel comprises forming a channel that runs along a longitudinal axis. A division is formed in the central channel such that the central channel is divided into a first section and a second section, wherein the first section is in fluid communication with a first inlet of the central channel and the second section is in fluid communication with a second inlet of the central channel. Forming the core section comprises forming a first spiral channel and a second spiral channel. The first end of the first spiral channel is in fluid communication with the first section of the central channel. The first spiral channel has a diamond cross-section and the first spiral channel spirals in the plane perpendicular to the longitudinal axis of the central channel. The first end of the second spiral channel is in fluid communication with the second section. The second spiral channel has a diamond cross-section and the second spiral channel spirals in the plane perpendicular to the longitudinal axis of the central channel. The second spiral channel is stacked on top of the first spiral channel such that the core has a diamond lattice cross-section.

Optionally there is provided at least one layer of first spiral channels and at least one layer of second spiral channels, and the at least one layer of the first spiral channels and the at least one layer of the second spiral channels alternate with each other.

Optionally, the at least one layer of first spiral channels is configured such that a first end of the at least one layer of first spiral channel is in fluid communication with the first section, and the at least one layer of second spiral channels is configured such that a first end of the at least one layer of second spiral channels is in fluid communication with the second section.

Optionally, all surfaces of the first spiral channel and second spiral channel are primary heat transfer surfaces.

Optionally, a diamond spiral heat exchanger may be formed by any of the previously described methods.

### BRIEF DESCRIPTION OF THE DRAWINGS

Figure 1 shows a heat exchanger with a spiral core
Figure 2 shows a cross section of a spiral diamond heat exchanger
Figure 3a shows spiral parallel flow in a spiral diamond heat exchanger
Figure 3b shows counter flow in a spiral diamond heat exchanger
Figure 4 shows a manifold of a spiral diamond heat exchanger
Figure 5 shows a manifold of a spiral diamond heat exchanger with duct ports
Figure 6 shows a spiral diamond heat exchanger printed by additive manufacturing techniques
Figure 7 shows a method for removing powder residue from a spiral diamond heat exchanger

### DETAILED DESCRIPTION

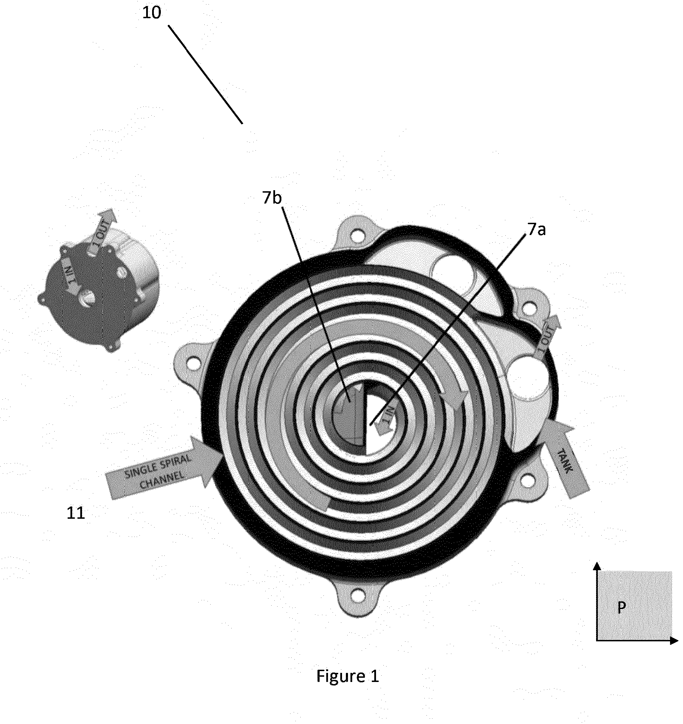

An exemplary heat exchanger 10 with a spiral core is described herein and depicted in Figures 1, 2 and 3. The core 2 of the heat exchanger 10 comprises a central channel 1 that runs through the centre of the heat exchanger 10. The central channel 1 runs along a longitudinal axis L. The central channel has a first inlet 1a and a second inlet 1b. The heat exchanger comprises a first single channel 11 and a second single channel 12. Each of the channels 11, 12 have a diamond cross-section. Each of the spiral channels 11, 12 are in fluid communication with the central channel 1. Each of the spiral channels are configured to spiral along a plane P perpendicular to the longitudinal axis L of the central channel 1. Figure 1 shows the heat exchanger from the perspective of looking down the longitudinal axis L of the central channel 1.

The central channel is divided into first and second sections 7a, 7b, wherein the first section 7a is in fluid communication with the first inlet 1a and the second section 7b is in fluid communication with the second inlet 1b. The first section 7a is in fluid communication with the first end of the first spiral channel 11. The second section 7b is in fluid communication with the first end of the second spiral channel 12.

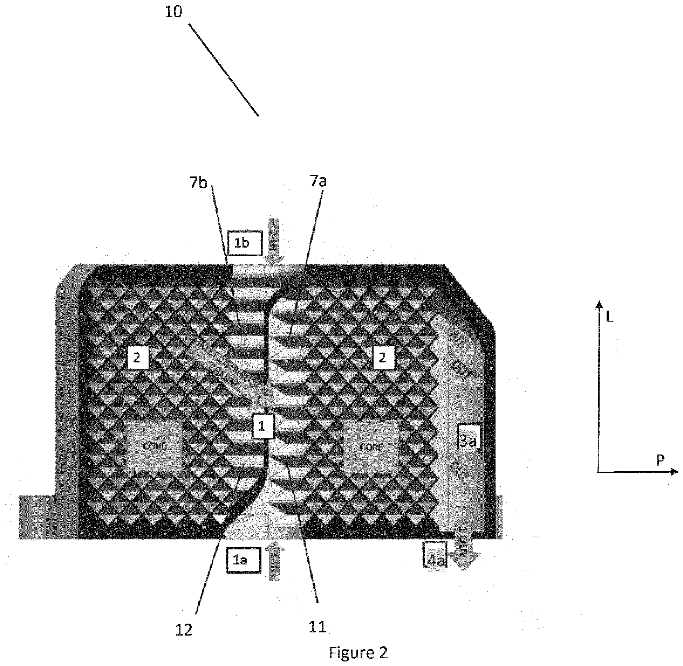

The second spiral channel 12 is stacked on top of the first spiral channel 11 so that the cross-section of the core 2 forms a diamond lattice, as shown in Figure 2. All surfaces of the first and second spiral channels 11, 12 can be primary heat transfer surfaces.

As shown in Figure 2, the heat exchanger 10 can comprise at least one layer of first spiral channels 11 and at least one layer of second spiral channels 12. The at least one layer of first spiral channels 11 and the at least one layer of second spiral channels 12 are stacked along the longitudinal axis L of the central channel 1 so that they alternate with each other. The first ends of the at least one layer of first spiral channels 11 are in fluid communication with the first section 7a. The first ends of the at least one layer of second spiral channels 12 are in fluid communication with the second section 7b. The at least one layer of first spiral channels 11 and the at least one layer of second spiral channels 12 are configured so that the core 2 has a diamond lattice cross-section. That is, a cross-sectional view of the heat exchanger 10, wherein the longitudinal axis L of the central channel is exposed, will show the core 2 with a diamond lattice cross-section. The diamond lattice cross-section is formed by the walls of the at least one layer of first spiral channels 11 and the at least one layer of second spiral channels 12.

The first section 7a is configured to distribute a first fluid to the at least one layer of first spiral channels 11 and the second section 7b is configured to distribute a second fluid to the at least one layer of second spiral channels 12. Heat can therefore be exchanged between the fluids across the walls of the spiral channels 11, 12.

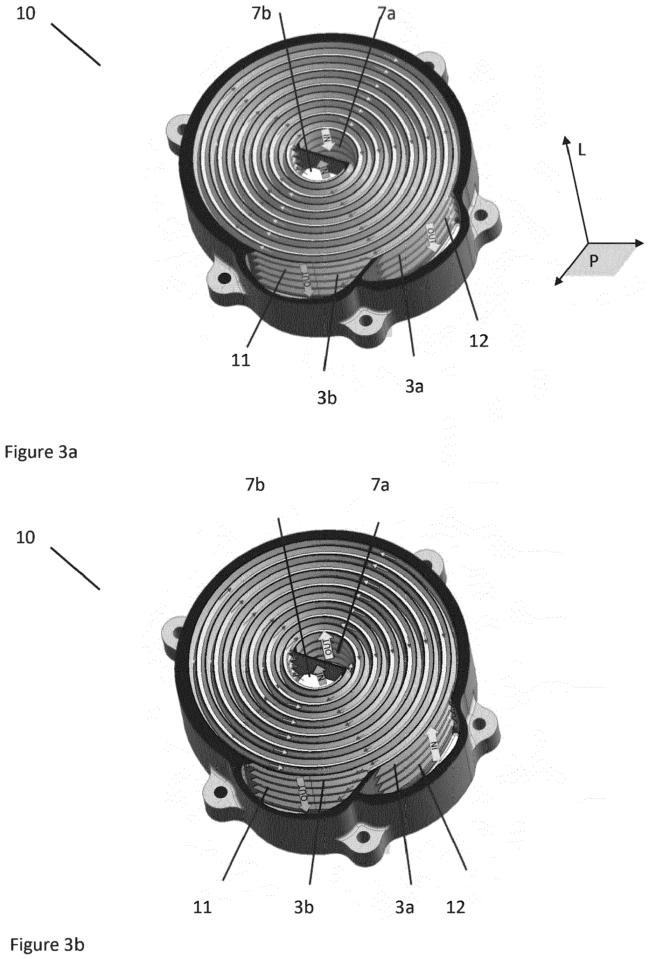

As shown in Figure 3, the at least one layer of first spiral channels 11 have a second end that terminates in a first tank 3a. The at least one layer of second spiral channel 12 have a second end that terminates in a second tank 3b.

As shown in Figure 2, the first section 7a receives the first fluid from a first inlet 1a and the second section 7b receives the second fluid from a second inlet 1b. The tanks 3a and 3b have outlets 4a and 4b respectively (only outlet 4a is shown in Figure 2).

An advantage of the above described heat exchangers is that they are easy to produce by additive manufacturing techniques. The design of the heat exchanger core can be easily scaled up by changing the length of the spirals or the number of layers.

By altering the number of layers and the spiral length of the first and second spiral channels 11 and 12, the performance of the heat exchanger 10 can be easily altered. Increasing the number of layers results in a reduction in the pressure and an improvement in heat transfer. Increasing the spiral length results in an improvement in heat transfer and an increase in the pressure drop.

A further benefit is that the tubular shape of the heat exchanger core reduces stress compared to a conventional core.

The above described heat exchangers are suitable for use in two flow configurations: spiral counter flow and spiral parallel flow (both shown in Figure 3). Spiral parallel flow is shown in figure 3a wherein the first section 7a receives the first fluid and the second section 7b receives the second fluid. The first fluid flows in a clockwise direction through the at least layer of first spiral channels 11 towards the tank 3a. The second fluid flows in a clockwise direction through the at least one layer of second spiral channels 12 towards the tank 3b.

Figure 3b shows spiral counter flow, wherein section 3a receives the first fluid and tank 7b receives the second fluid. The first fluid flows in an anti-clockwise direction through the at least one layer of second spiral channels 12 towards tank 7a, and the second fluid flows in a clockwise direction through the at least one layer of first spiral channels 11 towards the second section 3b. The external tanks can therefore be used as fluid inlets or outlets depending on the flow configuration. The in/out ports to the heat exchanger can be attached depending on the requirements.

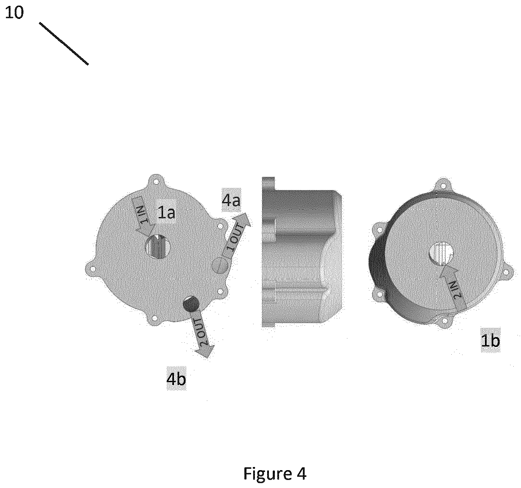

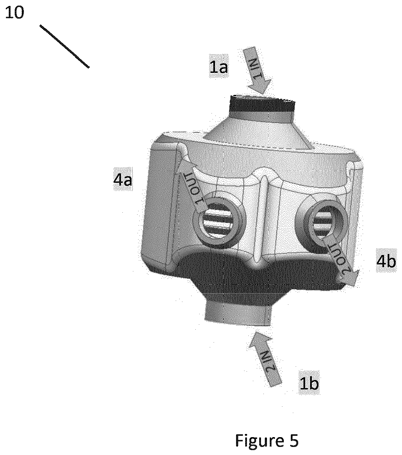

The placement of the first inlet 1a and second inlet 1b and the first outlet 4a and second outlet 4b can be easily changed depending on the interface requirements. Figure 4 shows one manifold configuration where the first inlet 1a, and the first and second outlets 4a , 4b are on one end of the heat exchanger 10, and the second inlet 1b is on the opposite end of the heat exchanger 10. Figure 5 shows another manifold configuration wherein the outlets 4a, 4b are formed on a side face of the manifold, the first inlet port 1a is formed on one end the manifold, and the second inlet port 1b is connected on a second end of the manifold, wherein the first end is opposite the second end. Duct attachments can be attached to the first and second inlets 1a, 1b and first and second outlets 4a, 4b.

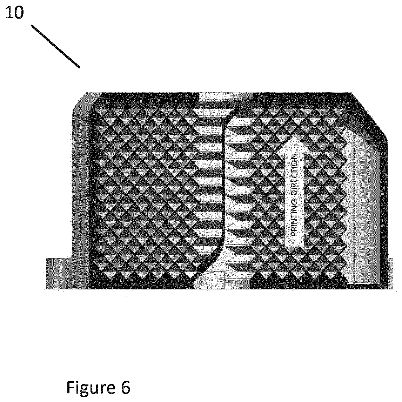

The spiral diamond core as well as the attachments, including the tanks, distribution channels and pressure relief valves (PRVs) can easily be made suitable for Additive Manufacturing technology. Figure 6 shows how a spiral diamond heat exchanger can be easily printed from the bottom up. The alignment of the diamond spiral layers is printing friendly. Furthermore, in the examples described herein, there is no need to design complex manifolds to distribute the fluids.

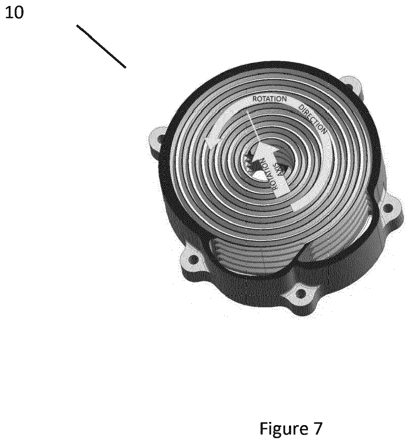

The method of the invention allows to overcome problems related to powder residue in heat exchanger. Powder residue can be left in the channels after the heat exchanger has been by additive manufacturing. The proposed method described herein involves rotating the heat exchanger around the axis of the central channel 1 in order to move powder from the internal sections of the coils up to the tank. Figure 7 shows the heat exchanger being rotated around the axis of the central channel.

Although this disclosure has been described in terms of preferred examples, it should be understood that these examples are illustrative only and that the claims are not limited to those examples. Those skilled in the art will be able to make modifications in view of the disclosure which are contemplated as falling within the scope of the appended claims.

## Claims

1. A method for forming a diamond spiral heat exchanger (10), comprising,
forming a central channel (1) and a core section (2),
wherein forming the central channel (1) comprises:
forming a channel that runs along a longitudinal axis (L); and
forming a division in the central channel (1) such that the central channel is divided into a first section (7a) and a second section (7b), wherein the first section (7a) is in fluid communication with a first inlet (1a) of the central channel (1) and the second section (7b) is in fluid communication with a second inlet (1b) of the central channel (1); and
wherein forming the core section (2) comprises:
forming a first spiral channel (11), wherein a first end of the first spiral channel (11) is in fluid communication with the first section (7a) of the central channel (1), wherein the first spiral channel (11) has a diamond cross-section, and wherein the first spiral channel spirals in the plane perpendicular (P) to the longitudinal axis (L) of the central channel (1), and
forming a second spiral channel (12), wherein a first end of the second spiral channel (12) is in fluid communication with the second section (7b), wherein the second spiral channel (12) has a diamond cross-section, and wherein the second spiral channel (12) spirals in the plane perpendicular (P) to the longitudinal axis (L) of the central channel (1), and
wherein the second spiral channel (12) is stacked on top of the first spiral channel (11) such that the core (2) has a diamond lattice cross-section; and
forming a first external tank (3a) and a second external tank (3b), wherein the at least one layer of first spiral channels (11) is configured such that a second end of the at least one layer of first spiral channel (11) is in fluid communication with the first tank (3a), and the at least one layer of second spiral channels (12) is configured such that a second end of the at least one layer of second spiral channels (12) is in fluid communication with the second tank (3b);
**characterised by** rotating the heat exchanger (10) around the longitudinal axis (L) such that powder is moved from the first section (7a) and the second section (7b) to the first external tank (3a) and the second external tank (3b).

2. The methods of claim 1, wherein there is provided at least one layer of first spiral channels (11) and at least one layer of second spiral channels (12), and the at least one layer of the first spiral channels (11) and the at least one layer of the second spiral channels (12) alternate with each other.

3. The method of claim 2, wherein the at least one layer of first spiral channels (11) is configured such that a first end of the at least one layer of first spiral channel (11) is in fluid communication with the first section (7a), and the at least one layer of second spiral channels (12) is configured such that a first end of the at least one layer of second spiral channels (12) is in fluid communication with the second section (7b).

4. The method of claim 1, wherein the first external tank (3a) has an outlet (4a), and the second external tank (3b) has an outlet (4b).

5. The method of any preceding claim, wherein all surfaces of the first spiral channel (11) and second spiral channel (12) are primary heat transfer surfaces.

6. A diamond spiral heat exchanger formed by the method of any preceding claim.

## Patentansprüche

1. Verfahren zum Bilden eines rhombusförmigen Spiralwärmetauschers (10),
umfassend Bilden eines Zentralkanals (1) und eines Kernabschnitts (2),
wobei Bilden des Zentralkanals (1) Folgendes umfasst:
Bilden eines Kanals, der entlang einer Längsachse (L) verläuft; und
Bilden einer Trennwand in dem Zentralkanal (1), sodass der Zentralkanal in einen ersten Abschnitt (7a) und einen zweiten Abschnitt (7b) unterteilt ist, wobei der erste Abschnitt (7a) in Fluidverbindung mit einem ersten Einlass (1a) des Zentralkanals (1) steht und der zweite Abschnitt (7b) in Fluidverbindung mit einem zweiten Einlass (1b) des Zentralkanals (1) steht; und
wobei Bilden des Kernabschnitts (2) Folgendes umfasst:
Bilden eines ersten Spiralkanals (11), wobei ein erstes Ende des ersten Spiralkanals (11) in Fluidverbindung mit dem ersten Abschnitt (7a) des Zentralkanals (1) steht, wobei der erste Spiralkanal (11) einen rhombusförmigen Querschnitt aufweist und wobei der erste Spiralkanal spiralförmig in der Ebene senkrecht (P) zu der Längsachse (L) des Zentralkanals (1) verläuft, und Bilden eines zweiten Spiralkanals (12), wobei ein erstes Ende des zweiten Spiralkanals (12) in Fluidverbindung mit dem zweiten Abschnitt (7b) steht, wobei der zweite Spiralkanal (12) einen rhombusförmigen Querschnitt aufweist und wobei der zweite Spiralkanal (12) spiralförmig in der Ebene senkrecht (P) zu der Längsachse (L) des Zentralkanals (1) verläuft, und
wobei der zweite Spiralkanal (12) auf dem ersten Spiralkanal (11) gestapelt ist, sodass der Kern (2) einen Querschnitt mit rhombusförmigem Gitter aufweist; und
Bilden eines ersten externen Tanks (3a) und eines zweiten externen Tanks (3b), wobei die mindestens eine Schicht erster Spiralkanäle (11) derart konfiguriert ist, dass ein zweites Ende der mindestens einen Schicht erster Spiralkanäle (11) in Fluidverbindung mit dem ersten Tank (3a) steht, und die mindestens eine Schicht zweiter Spiralkanäle (12) derart konfiguriert ist, dass ein zweites Ende der mindestens einen Schicht zweiter Spiralkanäle (12) in Fluidverbindung mit dem zweiten Tank (3b) steht; **gekennzeichnet durch**
Drehen des Wärmetauschers (10) um die Längsachse (L), sodass Pulver von dem ersten Abschnitt (7a) und dem zweiten Abschnitt (7b) zu dem ersten externen Tank (3a) und zu dem zweiten externen Tank (3b) bewegt wird.

2. Verfahren nach Anspruch 1, wobei mindestens eine Schicht erster Spiralkanäle (11) und mindestens eine Schicht zweiter Spiralkanäle (12) bereitgestellt werden und die mindestens eine Schicht der ersten Spiralkanäle (11) und die mindestens eine Schicht der zweiten Spiralkanäle (12) einander abwechseln.

3. Verfahren nach Anspruch 2, wobei die mindestens eine Schicht erster Spiralkanäle (11) derart konfiguriert ist, dass ein erstes Ende der mindestens einen Schicht erster Spiralkanäle (11) in Fluidverbindung mit dem ersten Abschnitt (7a) steht, und die mindestens eine Schicht zweiter Spiralkanäle (12) derart konfiguriert ist, dass ein erstes Ende der mindestens einen Schicht zweiter Spiralkanäle (12) in Fluidverbindung mit dem zweiten Abschnitt (7b) steht.

4. Verfahren nach Anspruch 1, wobei der erste externe Tank (3a) einen Auslass (4a) aufweist und der zweite externe Tank (3b) einen Auslass (4b) aufweist.

5. Verfahren nach einem der vorhergehenden Ansprüche, wobei alle Flächen des ersten Spiralkanals (11) und des zweiten Spiralkanals (12) primäre Wärmeübertragungsflächen sind.

6. Rhombusförmiger Spiralwärmetauscher, gebildet nach dem Verfahren nach einem der vorhergehenden Ansprüche.

## Revendications

1. Procédé de formation d'un échangeur de chaleur en spirale en diamant (10), comprenant,
la formation d'un canal central (1) et d'une section de noyau (2),
dans lequel la formation du canal central (1) comprend :
la formation d'un canal qui s'étend le long d'un axe longitudinal (L) ; et
la formation d'une division dans le canal central (1) de sorte que le canal central soit divisé en une première section (7a) et une seconde section (7b), dans lequel la première section (7a) est en communication fluidique avec une première entrée (1a) du canal central (1) et la seconde section (7b) est en communication fluidique avec une seconde entrée (1b) du canal central (1) ; et
dans lequel la formation de la section de noyau (2) comprend :
la formation d'un premier canal en spirale (11), dans lequel une première extrémité du premier canal en spirale (11) est en communication fluidique avec la première section (7a) du canal central (1), dans lequel le premier canal en spirale (11) a une section transversale en diamant, et dans lequel le premier canal en spirale s'enroule en spirale dans le plan perpendiculaire (P) à l'axe longitudinal (L) du canal central (1), et
la formation d'un second canal en spirale (12), dans lequel une première extrémité du second canal en spirale (12) est en communication fluidique avec la seconde section (7b), dans lequel le second canal en spirale (12) a une section transversale en diamant, et dans lequel le second canal en spirale (12) s'enroule en spirale dans le plan perpendiculaire (P) à l'axe longitudinal (L) du canal central (1), et
dans lequel le second canal en spirale (12) est empilé au-dessus du premier canal en spirale (11) de sorte que le noyau (2) a une section transversale en treillis de diamant ; et
la formation d'un premier réservoir externe (3a) et d'un second réservoir externe (3b), dans lequel l'au moins une couche de premiers canaux en spirale (11) est configurée de sorte qu'une seconde extrémité de l'au moins une couche de premier canal en spirale (11) est en communication fluidique avec le premier réservoir (3a), et l'au moins une couche de seconds canaux en spirale (12) est configurée de sorte qu'une seconde extrémité de l'au moins une couche de seconds canaux en spirale (12) est en communication fluidique avec le second réservoir (3b) ; **caractérisé par**
la rotation de l'échangeur de chaleur (10) autour de l'axe longitudinal (L) de sorte que la poudre est déplacée de la première section (7a) et de la seconde section (7b) vers le premier réservoir externe (3a) et le second réservoir externe (3b) .

2. Procédés selon la revendication 1, dans lesquels il est prévu au moins une couche de premiers canaux en spirale (11) et au moins une couche de seconds canaux en spirale (12), et l'au moins une couche de premiers canaux en spirale (11) et l'au moins une couche de seconds canaux en spirale (12) alternent les unes avec les autres.

3. Procédé selon la revendication 2, dans lequel l'au moins une couche de premiers canaux en spirale (11) est configurée de sorte qu'une première extrémité de l'au moins une couche de premier canal en spirale (11) est en communication fluidique avec la première section (7a), et l'au moins une couche de seconds canaux en spirale (12) est configurée de sorte qu'une première extrémité de l'au moins une couche de seconds canaux en spirale (12) est en communication fluidique avec la seconde section (7b).

4. Procédé selon la revendication 1, dans lequel le premier réservoir externe (3a) possède une sortie (4a), et le second réservoir externe (3b) possède une sortie (4b).

5. Procédé selon une quelconque revendication précédente, dans lequel toutes les surfaces du premier canal en spirale (11) et du second canal en spirale (12) sont des surfaces de transfert de chaleur primaires.

6. Échangeur de chaleur en spirale en diamant formé par le procédé selon une quelconque revendication précédente.
